## Europäisches Patentamt

## European Patent Office

## Office européen des brevets

(19)

(11) Veröffentlichungsnummer: **0 009 767**
**B1**

(12) **EUROPÄISCHE PATENTSCHRIFT**

(45) Veröffentlichungstag der Patentschrift:
10.02.82

(51) Int. Cl.³: **F 03 D 1/06**

(21) Anmeldenummer: 79103661.9

(22) Anmeldetag: 27.09.79

(54) Einblattrotor für Windturbinen und Verfahren zum Anfahren und Stillsetzen desselben.

(30) Priorität: 11.10.78 DE 2844262

(43) Veröffentlichungstag der Anmeldung:
16.04.80 Patentblatt 80/8

(45) Bekanntmachung des Hinweises auf die Patenterteilung:
10.02.82 Patentblatt 82/6

(84) Benannte Vertragsstaaten:
BE FR GB NL SE

(56) Entgegenhaltungen:
DE-A-2 739 297
FR-A-2 293 589
US-A-1 786 057
US-A-1 820 529
US-A-2 054 383

(73) Patentinhaber: Messerschmitt-Bölkow-Blohm
Gesellschaft mit beschränkter Haftung, Postfach 801109,
D-8000 München 80 (DE)

(72) Erfinder: Wortmann, Franz-Xaver, Dr.-Ing.,
Beethovenstrasse 4, D-7030 Böblingen (DE)

ACTORUM AG.

Einblattrotor für Windturbinen und Verfahren zum Anfahren und Stillsetzen desselben

Die Erfindung bezieht sich auf einen Einblattrotor für Windturbinen, mit einem durch ein Gegengewicht ausgeglichenen, um die Schlag- und die Anstellwinkelachse schwenkbeweglichen Rotorblatt, sowie auf ein Verfahren zum Stillsetzen und Anfahren desselben.

Bei Windturbinen ist der Kostenanteil für den Rotor und das Getriebe besonders hoch. Beide Anteile lassen sich reduzieren, wenn man höhere Drehzahlen oder eine höhere Schnelläufigkeit anstrebt. Dieser Weg ist gangbar, weil anders als beim Hubschrauber bei der hauptsächlich axial durchströmten Windturbine praktisch keine Machzahlbegrenzung existiert. Die grösste Schnelläufigkeit erreicht man mit dem Einblattrotor. Hinsichtlich seiner Massen kann man ihn durch ein Gegengewicht ausgleichen, nicht aber seine ausgeprägte aerodynamische Asymmetrie beseitigen. Einblattrotoren sind deshalb als Windturbinen nur selten und nur in kleinen Dimensionen von maximal etwa 10 m Durchmesser verwirklicht worden.

Die Erfindung beschäftigt sich mit dem Problem, diese Asymmetrie zumindest teilweise abzubauen und vorteilhaft zur Vergrösserung der Blattsteifigkeit bei grossen Rotoren von 50 bis 200 m Durchmesser zu nutzen. Darüber hinaus soll die Anstell- und Schlag- bzw. Schwenkwinkellagerung des Rotors verbessert und Massnahmen aufgezeigt werden, die das Anfahren und Stillsetzen des Rotors bei starkem Sturm in und aus der Segelstellung erleichtern. Es wird vorausgesetzt, dass es sich um eine Windturbine mit horizontaler Rotorachse handelt, deren Rotor auf der Leeseite des Turmes läuft und deren Drehzahl durch Regelung im wesentlichen unabhängig von der Windgeschwindigkeit konstant gehalten wird. Die Erfindung wird nachfolgend anhand der Zeichnungen beispielsweise näher beschrieben. Es zeigt:

Fig. 1 einen Einblattrotor herkömmlicher Bauart;

Fig. 2 einen Einblattrotor mit einer zum Rotorschwerpunkt versetzten Schlaggelenkachse;

Fig. 3 die Abspannung eines Rotors in der Drehebene;

Fig. 4a und 4b Einzelheiten der Rotorlagerung einschliesslich einer Blattwinkelrücksteuerung im Nabenbereich; und

Fig. 5 eine Seiten- und Vorderansicht des Rotors sowie einige Flügelschnitte in Spannweitenrichtung.

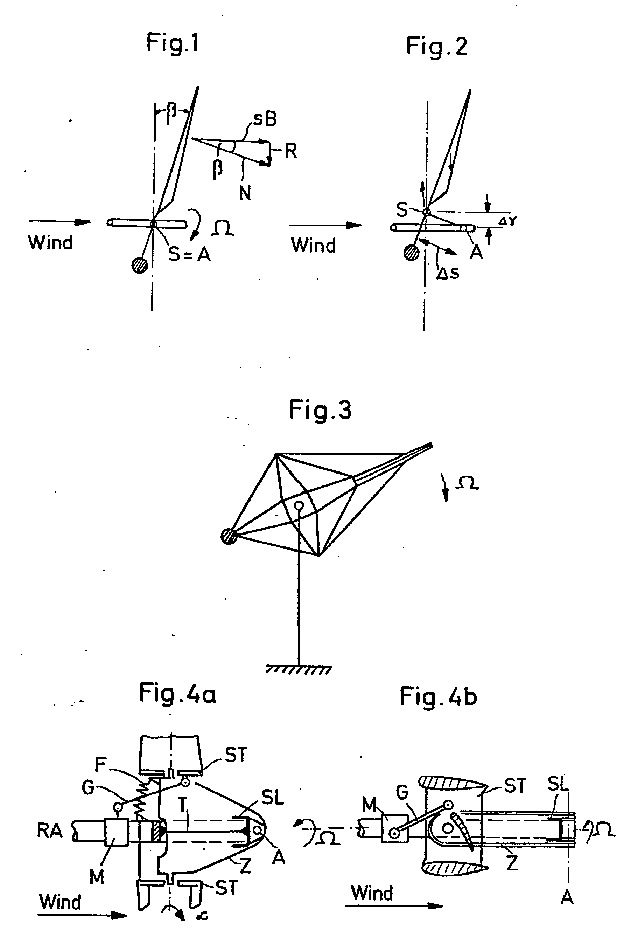

Im folgenden sei angenommen, der Einflügelrotor mit Gegengewicht, vgl. Fig. 1, sei in sich starr und könne zunächst frei um eine in der Drehebene liegende Achse A eine Schlagbewegung ausführen. Die Achse A liege im Schwerpunkt S des Rotors. Bei stationärem Betrieb nimmt der Rotor einen gewissen Konuswinkel $\beta$ an, der sich aus dem Momentengleichgewicht der Flieh- und Luftkräfte ergibt. Das Luftkraftmoment um die Schlagachse A wird durch ein entgegengesetztes Fliehkraftmoment ausgeglichen und ist etwa halb so gross wie das maximale Luftkraftmoment, das bei starrer Nabe ohne Konuswinkel entstehen würde. Da die Luftkräfte N (vgl. Fig. 1) als Druckkräfte senkrecht auf der Flügelfläche stehen, wirkt auf die Rotorachse neben dem Nutzmoment um dem axialen Schub $SB = N \cdot \cos \beta$ eine in radialer Richtung umlaufende Kraft $R = N \cdot \sin \beta$. Diese wie eine Unwucht umlaufende Kraft R kann im Gegensatz zur tangentialen Luftkraft, die neben einer Querkraft auch das Nutzmoment liefert, beträchtliche Werte annehmen und sollte möglichst ausgeglichen werden.

Das geschieht erfindungsgemäss dadurch, vgl. Fig. 2, dass das Schlaggelenk A nicht mehr im Schwerpunkt S bleibt, sondern stromab vom Schwerpunkt um eine Strecke $\Delta s$ verschoben wird. Durch den Konuswinkel $\beta$ entsteht eine radiale Schwerpunktverschiebung $\Delta r$ zum Rotorblatt hin, die eine radiale Unwucht erzeugt. Sie kann bei passender Wahl von $\Delta s$ die radiale Komponente R der Luftkraft für alle Konuswinkel $\beta$ genau kompensieren. Dazu muss

$$\Delta s = \frac{\text{Luftkraft } N}{\text{Rotorgewicht}} \cdot \frac{g}{\Omega^2} \text{ sein, wobei g die Erd-}$$

beschleunigung und $\Omega$ die Drehgeschwindigkeit des Rotors ist.

Allerdings würde ein exzentrisches Schlaggelenk A ohne Rückstellkräfte allein nicht funktionieren, weil z.B. beim Stillstand in vertikaler Ebene der Schwerpunkt des Rotors nicht unterstützt wäre und der Rotor umkippen würde. Das Schlaggelenk A muss deshalb zusätzlich mit einer Feder verbunden sein und zwar derart, dass im Stillstand das Moment aus Rotorgewicht und $\Delta s$ nur zu einer vergleichsweise kleinen radialen Verschiebung führt.

Durch Schwerkraft allein soll also der Konuswinkel $\beta$ mindestens kleiner als 1° bleiben. Weil $\Delta s$ nur einige Prozent vom Blattradius ausmacht und das Luftkraftmoment aus dem Rotorschub etwa eine Grössenordnung über dem Schweremoment liegt, existieren passende Federsteifigkeiten, die gegenüber der Schwere als steif und gegenüber den Luftkräften als weich angesehen werden können.

Zur Illustration einige Daten: ein Rotor mit 100 m Durchmesser entwickelt bei rund 12 m/s Wind z.B. einen Schub von etwa 500 kN (50 to), der bei etwa 70% des Radius angreift. Das Luftkraftmoment ist dann $500 \times 35 = 17500$ kN . m (1.750 mto). Wenn der Rotor 15 to wiegt und $\Delta s = 7,5$ m lang ist, ist das Schweremoment lediglich 15 . 9,81 . 7,5 $\cong$ 1120 kN . m (112 mto), also nur 1/15 des Luftkraftmomentes.

Nimmt man noch eine relativ steife Bettung der Rotorwelle an, ist die Federung der Schlagbewegung auch beim Anlauf und beim Abstellen des Rotors hilfreich. Auf das Rotorblatt wirken bei langsamer Drehung Luftkräfte, die noch nicht durch Fliehkräfte ausgeglichen werden können und bei einer rein gelenkigen Lagerung um A zu extremen Konuswinkeln und damit zur Kollision des Rotors mit der Turmabspannung führen würden. Eine gefederte Lagerung, die so steif ist, dass das Rotorgewicht allein nur Konuswinkel $\beta < 1°$ erzeugt, ist bereits hart genug, um bei Blattrücksteuerung ein einwandfreies An- und Auslaufen sicherzustellen.

Ob man Schlaggelenk A und Feder getrennt ausführt oder integriert in Form einer Biege- oder Torsionsfeder verwirklicht, kann zunächst offen bleiben. Man kann auch daran denken, statt einer beidseitig symmetrisch wirkenden Feder eine Feder mit Vorspannung zu verwenden, die das Blatt bei kleinen Luftkräften gegen einen gepufferten Endanschlag mit $\beta = 0°$ zieht und bei langsamen Lauf den Schwereeinfluss völlig vermeidet.

Neben der Schnelläufigkeit bietet der Einflügelrotor auch strukturell entscheidende Vorzüge. Da das Gegengewicht und seine Halterung aerodynamisch neutral gestaltet sein können, braucht man, anders als beim Zweiflügelrotor, bezüglich der Anstellwinkelverstellung keine Rücksicht auf die Gegenseite zu nehmen.

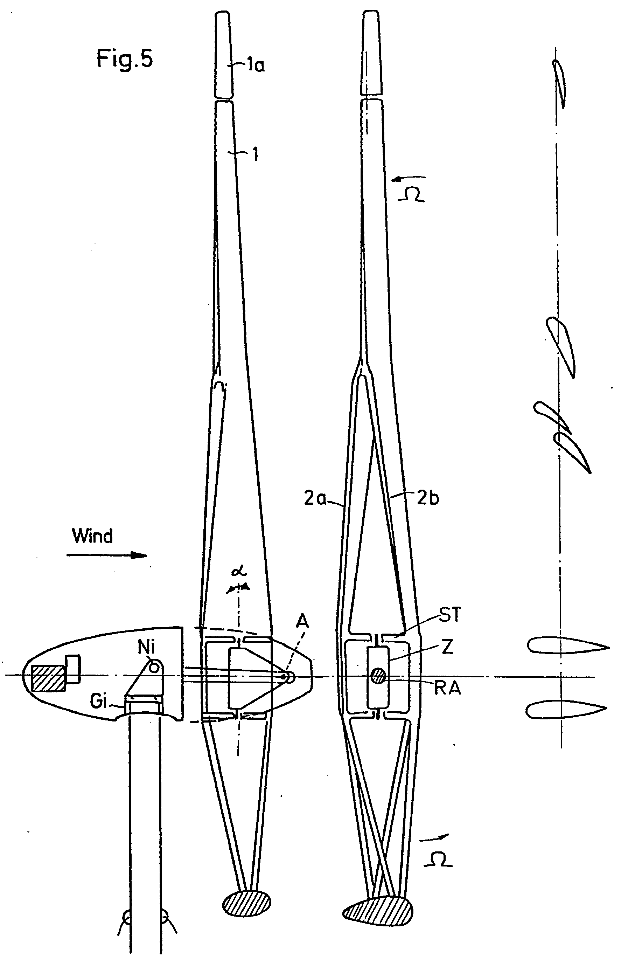

Das bedeutet in konstruktiver Hinsicht eine ausserordentliche Vereinfachung: die grössten Belastungen des Rotors durch Fliehkräfte und Biegemomente brauchen erfindungsgemäss in der Nabe nicht über die Lager zur Anstellwinkelverstellung zu laufen, sondern können im Nabenbereich ohne Unterbrechung direkt vom Flügel zum Gegengewicht gehen. Das Anstellwinkellager der $\alpha$-Achse (vgl. Fig. 5) kann ins Innere der Nabe rücken und braucht als Belastung nur das Nutzmoment und das Rotorgewicht zu tragen.

Damit eröffnet sich gleichzeitig eine noch weitergehende Möglichkeit, die besonders beim Bau grosser Rotoren oder bei kleineren Rotoren aus relativ weichem Material wie z.B. thermoplastischem Kunststoff von Bedeutung ist: es gibt keine einschneidenden Beschränkungen mehr hinsichtlich der Holmhöhe im Nabenbereich, d.h. man kann nahezu beliebige Steifigkeiten verwirklichen.

Fig. 3 betont diese Möglichkeit hinsichtlich der Schwenksteife durch eine der Deutlichkeit halber übertriebene Form der Abspannung eines Rotors in der Drehebene. Die Schwenkeigenfrequenz aus der Durchbiegung des Rotors kann dadurch wesentlich grösser als die Drehfrequenz des Rotors werden. Man vermeidet also die einfache Resonanz bei starr gelagerter Rotorwelle als auch die wesentlich schwieriger zu beherrschende Instabilität bei weich gelagerter Rotorwelle (die sogenannte «Bodenresonanz»).

Senkrecht zur Rotorebene hat man nicht die gleiche Freiheit, die Steifigkeit des Rotors zu vergrössern, vor allem nicht beim Leeläufer, weil Maschinenhaus und Turmabspannung im Wege stehen und auch die Anstellwinkelverstellung behindert wäre. Deshalb ist in Fig. 5 eine etwas andere Möglichkeit skizziert, bei dem die Holmgurte sowohl hinsichtlich der Schwenk- als auch der Schlagbewegung Zug- und Druckkräfte aufnehmen können.

Das aussen einflügelige Rotorblatt wird bei mittleren Radien von 30 - 50% des maximalen Radius in Doppelflügel aufgespalten, die zur Rotorachse hin keilförmig auseinanderlaufend im Bereich der Nabe einen Abstand voneinander haben, der etwa so gross ist wie der Durchmesser der Verkleidung der Maschinengondel.

Natürlich ist nicht die Verkleidung der wesentliche Parameter, sondern die Steifigkeit des Rotors und das Spannungsniveau im Nabenbereich. Im aerodynamisch wichtigen Aussenteil wird das Rotorblatt jetzt zum Eindecker und im strukturell wichtigen Innenteil zum Doppeldecker. Die Trägheitsmomente gegenüber den Schwere- als auch den Luftkraftmomenten können jetzt leicht soweit gesteigert werden, dass eine Verdoppelung der Grenzgrösse von Rotoren, die derzeit bei etwa hundert Metern liegt, möglich erscheint.

Auf der Gegengewichtsseite reduziert sich der Doppeldecker zu einem reinen Stabwerk, das das Gegengewicht trägt. Die Bremswirkung dieser Seite wird sowohl durch eine Profilierung der Streben und des Gegengewichts als auch durch eine Tandemanordnung der Streben bezüglich der Anströmung vermindert.

Die Fig. 5 gibt eine Vorstellung vom Aussehen eines derartigen Rotors. Um das Trägheitsmoment bezüglich der Anstellwinkelachse $\alpha$ klein zu halten, liegen Blattachse, $\alpha$-Lager und Schwerpunkt des Gegengewichts praktisch auf einer Geraden.

Für die Lebensdauer einer Windturbine und die Gleichförmigkeit der Energieabgabe sollte die Anlage eine ausgeprägte Fähigkeit zur Böenabsorption haben. Es hat sich herausgestellt, dass neben der Blattrücksteuerung beim Schlagen vor allem eine niedrige Schwenkfrequenz des Rotors (Schwenkbewegung in der Drehebene des Rotors) von entscheidender Bedeutung ist.

Während man beim mehrflügeligen Rotor wegen der Turbulenzstruktur des Windes jedem Blatt individuelle Schwenkfreiheit geben muss, genügt es beim Einflügler (vgl. Fig. 4a und 4b), wenn die Schwenkfreiheit des Rotors durch eine federnde Verbindung T (in Fig. 4a) mit der Rotorwelle RA hergestellt wird. Wesentlich ist dabei, dass nun die Achse der Schwenkbewegung mit der Rotorachse zusammenfallen kann und dadurch die Schwenkbewegung nicht zu einer radialen Unwucht führt.

Der Rotor soll also gemäss Fig. 4 seinen Schub und sein Gewicht über ein Lager SL auf die Rotorwelle RA absetzen, behält jedoch seine Drehfreiheit bei, die lediglich durch eine elastische Torsionsfeder T, die SL mit RA verbindet, eingeschränkt ist. Diese Verbindung kann wie in Fig. 4a durch eine zentrale Torsionsfeder T oder durch ein Elastomerrohr oder durch mehrere exzentrische Spiral- oder Biegefedern mit geringer Dämpfung realisiert sein. Die Steifigkeit einer solchen Feder ergibt sich eindeutig

aus der Schwenkeigenfrequenz $\omega_s$ des Rotors bei festgehaltener Rotorwelle. Sie sollte deutlich unter der Rotordrehfrequenz liegen, d.h. $\omega_s/\Omega$ sollte etwa Werte von 0,1 - 0,3 erreichen. Dieses überkritische Frequenzverhältnis beinhaltet gleichzeitig die Wirkung eines elastischen Energiespeichers, der u.a. auch eine mit der Höhe zunehmende Windstärke hinsichtlich des Nutzmomentes nahezu völlig ausgleicht.

Wenn die Torsionsfeder wie in Fig. 4 bei schräger Lage der Gelenkstange G zwischen ST und der achsfesten Muffe M liegt, ergibt sich (vgl. Fig. 4b) noch eine stabilisierende Wirkung auf die Schwenkbewegung; eilt das Rotorblatt z.B. durch eine Böe gegenüber einer mittleren Drehgeschwindigkeit voraus, wird durch die Gelenkstange G, die die Muffe M und die Nabenstruktur ST verbindet. Die Anstellung des schwarz gezeichneten Profils, das den äusseren Flügelbereich darstellen soll, verkleinert und die auslösende Luftkraft reduziert.

Natürlich tritt bei einer räumlich oder zeitlich begrenzten Bö an der Rotorwelle nicht nur eine Momentenänderung, sondern auch eine zusätzliche Seitenkraft auf. Es wird jedoch für grosse Anlagen vorausgesetzt, dass die Rotorwelle zusammen mit dem Maschinenhaus auf den Turmkopf gedämpfte überkritische Nick- und Gierbewegungen ausführen kann und sowohl die periodische Seitenkraft des Nutzmomentes als auch andere Seitenkräfte in Form einer gedämpften Schwingung durch Massenkräfte absorbieren kann.

Bei einer solchen Lagerung des Maschinenhauses besteht eine gewisse Schwierigkeit darin, den in der Fig. 5 skizzierten Rotor bei starkem Wind stillzusetzen, weil einerseits die kardanische Innenlagerung zusammen mit der die Nabe durchdringenden Rotorwelle nur eine begrenzte Verstellung des Anstellwinkels von insgesamt etwa 60° - 70° erlaubt. Das ist für die Regelung im Betrieb mehr als ausreichend, nicht jedoch zum Stillsetzen der Maschine.

Andererseits rücken bei abnehmender Drehzahl des Rotors die Eigenfrequenzen der Nick- und Gierschwingung des Maschinenhauses an die Rotordrehzahl heran und erreichen dann unzulässige Amplituden. Es wird deshalb vorgeschlagen, die im Normalbetrieb erwünschte Nick- und Gierfreiheit des Maschinenhauses auf dem Turmkopf beim Stillsetzen der Maschine zeitweise zu blockieren und/oder stärker zu dämpfen. Kommt der Rotor in horizontaler Lage zur Ruhe, kann die Gierfreiheit erneut freigegeben werden. Das Rotorblatt kann nun wie der Ausleger eines Baukranes horizontal in Windrichtung drehen. Diese Art der Segelstellung ist bei Sturm wesentlich sicherer als etwa ein quer zum Wind in Segelstellung stehender Flügel.

Um die Position «Segelstellung» weiter zu stabilisieren, wird vorgeschlagen, einen äusseren Flügelteil 1a von etwa 10 - 15% des Radius um eine radiale Achse etwa 90° zu drehen. Dadurch entsteht an der Blattspitze ein Kreuzleitwerk, das den Flügel in jeder Richtung auch gegen die restlichen Luftkraftmomente des Maschinenhauses und des Gegengewichts stabilisiert.

Das Stillsetzen eines grossen Rotors bei zu starkem Wind kann in folgender Weise vor sich gehen: zunächst wird vorübergehend die Nick- und Gierfreiheit des Maschinenhauses durch Brems- und/oder Dämpfungseinrichtungen eingeschränkt und dann mittels der in Achsrichtung verschieblichen Muffe M in Fig. 4b die Anstellung des Flügels so weit als möglich vermindert und damit die Drehzahl stark reduziert.

Dann wird über ein Stellglied der drehbare Aussenflügelteil 1a auf noch kleinere Anstellwinkel gebracht, derart, dass ein maximales Bremsmoment entsteht. Wenn jetzt bei extrem langsamer Drehbewegung der Rotor sich einer horizontalen Position nähert, wird die Gierfreiheit des Maschinenhauses wieder freigegeben und gleichzeitig der äussere Flügelteil 1a durch weitere Drehung in die Position «Kreuzleitwerk» gebracht. Die Luftkräfte drehen dann das Blatt in Windrichtung und gleichzeitig das Maschinenhaus oder die Rotorwelle um die Turmachse quer zur Windrichtung.

Das Anlaufen des Rotors bei hohen Windgeschwindigkeiten erfordert eine aktive Drehung des Maschinenhauses um die Turmachse, wobei die äussere Flügelspitze 1a des Rotors zunächst aus der Stellung Kreuzleitwerk in die Normalstellung gebracht wird. Bei zunächst festgehaltener oder eingeschränkter Nick- und Gierfreiheit des Maschinenhauses beginnt jetzt der Anlauf des Rotors. Nach Erreichen der Solldrehzahl wird auch die Nick- und Gierfreiheit des Maschinenhauses wieder freigegeben.

Die für das Abstoppen erwünschte Drehbewegung der äusseren Flügelspitze 1a kann zusätzlich auch als autonome Sicherung gegen Überdrehzahlen des Rotors genutzt werden. Im Gegensatz zu älteren Vorschlägen, die unter Ausnutzung von Fliehkräften ein Querstellen der äusseren Flügelspitze vorsahen, sollen hier erfindungsgemäss aerodynamische Momente herangezogen werden. Das hat bei gleicher Empfindlichkeit gegenüber Drehzahlüberschreitungen den Vorteil einer einfacheren mechanischen Ausführung. Die drehbare Lagerung der Flügelspitze 1a braucht nur mit einer Torsionsfeder verbunden sein, die auch die Fliehkräfte aufnimmt. Man kann nun die Lage der Drehachse relativ zur Flügeltiefe und die Steifigkeit der Torsionsfeder so abstimmen, dass die Flügelspitze bei der zulässigen Überdrehzahl «auskippt», d.h. sich unter schneller Vergrösserung der Anstellung querstellt. (Die notwendigen Daten sind jedem Lehrbuch der Flugmechanik zu entnehmen.)

Diese Art der Luftbremsung hat noch den Nachteil, dass die Gesamtkraft des Flügels beim Auskippen keine stetige Zunahme des Widerstands, sondern einen unregelmässigen Verlauf produziert, der vom Anliegen oder Abreissen der Flügelströmung bestimmt wird. Deshalb wird vor dem Auskippen durch eine passende Störung bei etwa 30% der Flügeltiefe auf der Flügelsaugseite dafür gesorgt, dass als erstes die Strömung zum Abreissen gebracht wird. Eine Vergrösserung der Anstellung ändert dann den Strömungszustand nicht mehr und der Widerstand steigt beim Auskippen monoton an.

Die einfachste Art, die Strömung auf der Flügelsaugseite zum Abreissen zu bringen, besteht darin, dass man federbelastete Klappen benutzt, die sich um eine radiale Achse öffnen können. Wenn man den Innenraum des äusseren Flügelteils 1a z.B. durch eine Fanghutze nahe der Flügelspitze mit dem Staudruck der Anströmung «aufpumpt», sind die Störklappen durch eine Luftkraft belastet, die nach Überschreiten des Sollwertes die Klappen öffnet und sowohl mechanisch als pneumatisch für eine genügende Störung der Oberseitenströmung sorgt.

Weitere Einzelheiten sind in den Fig. 4 und 5 dargestellt. Fig. 4a und 4b erläutern den Nabenbereich. RA ist die Rotorwelle, auf der die axial verstellbare Muffe M die Gelenkstange G hält. Anstelle der verstellbaren Muffe ist natürlich auch eine Lösung möglich, bei der die Gelenkstange als Stellglied ausgebildet ist. Eine Schlagbewegung in Windrichtung ist also immer mit einer Verkleinerung der Flügelanstellung verbunden.

In der vorderen Grenzlage der Muffe schlägt die Rotornabe an die Rotorwelle RA. Bei starrer $\alpha$ - $\beta$ Kopplung ist jetzt keine Schlagbewegung mehr möglich, was zu hohen Zwangskräften führen kann. Die Gelenkstange G sollte deshalb z.B. durch eine vorgespannte Feder im Inneren der Stange, oberhalb einer Grenzlast nachgiebig sein, damit auch in der Nähe der Segelstellung die Schlagfreiheit nicht unterbunden wird.

Bei festgehaltener Muffe M wird der Rotor durch die Gelenkstange G sowohl bei einer Schlagbewegung um A als auch bei einer Schwenkbewegung um RA im stabilisierenden Sinn um die $\alpha$-Achse gedreht. Zur Verdeutlichung ist in Fig. 4b das Profil des äusseren Flügelschnittes als schwarze Kontur mitgezeichnet. Bei Verschiebung der Muffe M wird die Drehzahl und Leistung des Rotors in bekannter Weise verändert. Am Ende der Rotorwelle RA sitzt das Lager SL, das einerseits über die Torsionsfeder T mit der Rotorwelle RA, andererseits über die Schlagachse A mit dem Zentralkasten Z verbunden ist. Der Zentralkasten wird bei Windstille durch die Feder F in der gezeichneten Mittellage gehalten.

Auf der Seite des Maschinenhauses hat der Zentralkasten Z einen Ausschnitt für die Rotorwelle RA (vgl. Fig. 4a), der eine Schlagbewegung innerhalb vorgegebener Grenzen, wie z.B. $0° < \beta < 15°$ erlaubt, derart, dass bei Stillstand $\beta = 0$ wird und bei maximalem Schlagwinkel noch keine Kollision des Gegengewichtes mit dem Turm möglich ist. Die Endanschläge sind natürlich gepuffert. Durch zwei Zapfenlager, die die $\alpha$-Achse fixieren, ist der Zentralkasten Z mit der Nabenstruktur ST verbunden. Fig. 5 gibt einen Überblick über das Aussehen des gesamten Rotors, mit dem Rotorblatt 1, dessen äusserer Flügelteil 1a entweder aktiv zu kleineren Winkeln hin verstellbar ist oder bei Überdrehzahl durch Luftkräfte automatisch zu grossen Winkeln verstellt wird. Die Aufspaltung des Blattes 1 zum Doppeldecker 2a, b ist in der Seitenansicht und mit Blick in Windrichtung skizziert. Ganz rechts sind einige Flügelschnitte angegeben. Der Turm trägt an seiner Spitze das Gierlager Gi und darüber das Nicklager Ni.

## Patentansprüche

1. Einblattrotor für Windturbinen, dadurch gekennzeichnet, dass das Schlaggelenk (A) oder ein äquivalentes Ersatzgelenk auf der Leeseite des Rotorschwerpunktes (S) liegt und beide Punkte (A, S) vorzugsweise um $\Delta s = \dfrac{N}{G} \cdot \dfrac{g}{\Omega^2}$ auseinanderliegen, wobei N = Normalkraft der Luftkraft, G = Rotorgewicht, g = Erdbeschleunigung, $\Omega$ = Rotor-Kreisfrequenz ist, und dass der Rotorschwerpunkt (S) elastisch abgestützt ist.

2. Einblattrotor nach Anspruch 1, dadurch gekennzeichnet, dass das durch die elastische Abstützung (F) und den Rotor gebildete Feder-Massesystem im Stillstand um das Schlag- oder äquivalente Ersatzgelenk (A) eine Schlageigenfrequenz aufweist, die wesentlich unter der Rotorfrequenz liegt.

3. Einblattrotor für Windturbinen nach Anspruch 1, mit einem durch ein Gegengewicht ausgeglichenen, um die Schlag- und die Anstellwinkelachse (A, $\alpha$) schwenkbeweglichen Rotorblatt (1), dadurch gekennzeichnet, dass die das Gegengewicht und das Rotorblatt (1) miteinander verbindende Nabenstruktur (ST) über eine im Nabeninneren angeordnete, kardanische Schlaggelenk- und Anstellwinkellagerung (A, Z) an die Rotorwelle (RA) angeschlossen ist.

4. Einblattrotor nach Anspruch 3, dadurch gekennzeichnet, dass die Nabenstruktur (ST) eine den Rotor versteifende, Gegengewicht und Rotorblatt (1) verbindende Abspannung aufweist.

5. Einblattrotor nach einem der vorhergehenden Ansprüche, dadurch gekennzeichnet, dass das Rotorblatt (1) nach aussen hin als Eindecker und nabenseitig als Doppeldecker (2a, 2b) ausgebildet ist.

6. Einblattrotor nach einem der vorhergehenden Ansprüche, dadurch gekeennzeichnet, dass die Nabenstruktur (ST) zum Gegengewicht hin als Stabwerk ausgebildet ist und Gegengewicht und Stabwerk stromlinienförmige Querschnitte aufweisen.

7. Einblattrotor für Windturbinen, insbesondere nach Anspruch 1, dadurch gekennzeichnet, dass das Rotorblatt (1) einen äusseren, zur Stabilisierung der Segelstellung etwa über 90° um eine im wesentlichen radiale Achse in eine Kreuzleitwerkstellung drehbaren Flügelteil (1a) aufweist.

8. Einblattrotor nach Anspruch 7, dadurch gekennzeichnet, dass der äussere Flügelteil (1a) mit dem Rotorblatt (1) über eine Torsionsfeder mit einer den äusseren Flügelteil (1a) bis zu einer bestimmten Überdrehzahl in der Normalstellung haltenden, oberhalb dieser Drehzahl jedoch ein Verdrehen des äusseren Flügelteils (1a) unter der Wirkung der Luftkräfte zulassenden Federsteifigkeit verbunden ist.

9. Einblattrotor nach Anspruch 8, dadurch gekennzeichnet, dass der äussere Flügelteil (1a) im Inneren mit dem Staudruck der Anströmung beaufschlagt ist und auf der Flügelsaugseite federbelastete, vor Erreichen der Überdrehzahl unter der Staudruckwirkung öffnende Störklappen vorgesehen sind.

10. Verfahren zum Stillsetzen des Einblattrotors nach einem der Ansprüche 7 - 9, dadurch gekennzeichnet, dass vorübergehend die Nick- und Gierfreiheit der Rotorachse eingeschränkt und die Drehzahl durch Verminderung der Blattanstellung und Verstellung des äusseren, drehbaren Flügelteils reduziert wird, und dann bei sehr langsamer Drehung des Rotors und Annäherung des Rotorblatts an die Horizontale sowohl der äussere, drehbare Flügelteil in die Kreuzleitstellung gebracht als auch gleichzeitig die Gierfreiheit der Rotorachse wieder freigegeben wird, damit sich das Rotorblatt horizontal in Windrichtung stellen kann.

11. Verfahren zum Anfahren des Einblattrotors nach einem der Ansprüche 7 - 9, dadurch gekennzeichnet, dass bei eingeschränkter Nick- und Gierfreiheit der Rotorachse der äussere, drehbare Flügelteil des Blattes, das horizontal in Windrichtung zeigt, aus der Kreuzleitwerkin die Normalstellung gebracht und gleichzeitig die Rotorachse durch ein Stellglied in den Wind gedreht wird, woraufhin der Rotor anläuft und nach Erreichen der Solldrehzahl wieder die Nick- und Gierfreiheit voll freigegeben wird.

### Claims

1. Single-blade rotor for wind turbines as characterized by the flapping hinge (A) or an equivalent alternative hinge which lies to the leeward side of the centre of gravity of the rotor (S) and where both points (A, S) are separated from each other, preferably by the measurements $\Delta s = \dfrac{N}{G} \cdot \dfrac{g}{\Omega^2}$, in which N = normal force of the air force, G = rotor weight, g = acceleration due to gravity, $\Omega$ = rotor radian frequency, and by the centre of gravity of the rotor (S) which is elastically supported.

2. Single-blade rotor according to claim 1, as characterized by the spring mass system produced by the elastic support (F) and the rotor, so that it exhibits at rest a natural flapping frequency around the flapping or equivalent alternative hinge (A), which is considerably less than the rotor frequency.

3. Single-blade rotor for wind turbines according to claim 1, with a rotor blade (1) balanced by a counterweight and hunting around the axis for flapping and the angle of attack (A, α), as characterized by the hub assembly (ST) where the counterweight and rotor blade (1) are joined with each other and the universal-jointed mounting for the flapping hinge and angle of attack (A, Z), which is built into the inside of the hub, is attached to the rotor shaft (RA).

4. Single-blade rotor according to claim 1, as characterized by the hub assembly (ST), which exhibits a rotor-stiffening bracing which joins the counterweight and rotor blade (1).

5. Single-blade rotor according to the above-mentioned claims, as characterized by the rotor blade (1), which is designed as a single blade on the outer side and a double blade (2a, 2b) on the hub side.

6. Single-blade rotor according to the above-mentioned claims, as characterized by the hub assembly (ST), which is designed as a truss structure towards the counterweight, where both counterweight and truss structure have streamlined cross-section.

7. Single-blade rotor for wind turbines, especially according to claim 1, as characterized by the rotor blade (1), which exhibits an outer wing section (1a) turning through approximately 90° around a full radial axis and across the position of the horizontal stabilizer in order to stabilize the feathering pitch.

8. Single-blade rotor according to claim 7, as characterized by the outer wing section (1a), which is connected to the rotor blade (1) by a torsion spring, where the spring stiffness holds the outer wing section (1a) to a set excess speed in the normal position, and yet, above this speed, permits a twisting of the rotor wing section (1a) as produced by the air forces.

9. Single-blade rotor according to claim 8, as characterized by the outer wing section (1a), whose interior receives the residual pressure of the blower stream and which has fitted to its suction side spring-loaded spoilers which are opened by the residual pressure before the excess speed is reached.

10. Method of stopping the single-blade rotor according to one of the claims 7 - 9, as characterized by the pitch and yaw freedom of the rotor axis, which is temporarily restricted, and the speed of the outer, rotating wing section, which is temporarily reduced by a decrease of the blade incidence and displacement, and just as the outer, rotating wing section is brought to a position across the horizontal stabilizer with the rotor turning very slowly and the rotor blade approaching the horizontal, so the yaw freedom of the rotor axis is also simultaneously released, so that the rotor blade can adopt a horizontal position in the direction of the wind.

11. Method of starting the single-blade rotor according to one of the claims 7 - 9, as characterized by the outer, rotating wing section of the blade lying horizontal in the direction of the wind, which, during restricted pitch and yaw freedom of the rotor axis, is brought to the normal position from that across the horizontal stabilizer and where the rotor axis is turned into the wind through an actuator, whereby the rotor starts and the pitch and yaw freedom is again fully released once a set speed has been reached.

**Revendications**

1. Rotor monopale pour turbines éoliennes caractérisé par le fait que l'articulation de battement (A) ou une articulation équivalente est placée du côté sous le vent du point d'inertie du rotor (S) et que les deux points (A, S) sont espacés de préférence de $\Delta s = \dfrac{N}{G} \cdot \dfrac{g}{\Omega^2}$; N étant la composante normale de la force aérodynamique, G le poids du rotor, g l'accélération de la pesanteur, $\Omega$ le fréquence de rotation du rotor, et que le centre d'inertie du rotor (S) est étayé de façon élastique.

2. Rotor monopale selon la revendication 1, caractérisé par un système élastique ressort-masse constitué par le système d'étayage élastique (F) et le rotor présentant au repos autour de l'articulation de battement ou de l'articulation de remplacement équivalente (A) une fréquence propre de battement très inférieure à la fréquence du rotor.

3. Rotor monopale pour turbines éoliennes selon la revendication 1, doté d'une pale (1) animée d'un mouvement de traînée autour de l'axe de battement et de l'axe d'incidence (A, $\alpha$) et stabilisée par un contrepoids, caractérisé par le fait que le dispositif à moyeu (ST) reliant le contrepoids à la pale (1) est relié à l'arbre du rotor (RA) par un dispositif à palier d'articulation de battement et d'axe d'incidence flottant logé à l'intérieur du moyeu (A, Z).

4. Rotor monopale selon la revendication 3, caractérisé par un dispositif à moyeu (ST) présentant une structure d'ancrage renforçant le rotor et reliant le contrepoids à la pale (1).

5. Rotor monopale selon l'une des revendications précédentes, caractérisé par une pale (1) monocorps vers l'extérieur et à double corps vers le moyeu (2a, 2b).

6. Rotor monopale selon l'une des revendications précédentes, caractérisé par le fait que le dispositif à moyeu (ST) se présente sous forme de barreaux côté contrepoids et que le contrepoids et ce dispositif à barreaux présentent une section fuselée.

7. Rotor monopale pour turbines éoliennes selon la revendication 1 en particulier, caractérisé par une pale (1) dont l'extrémité se présente sous forme d'un volet mobile autour d'un axe essentiellement radial at pouvant être mis en position croisée à 90° par rapport au plan de la pale, servant ainsi à stabiliser la position en drapeau.

8. Rotor monopale selon la revendication 7, caractérisé par son volet extérieur (1a) relié avec la pale proprement dite (1) au moyen d'un ressort de torsion dont la rigidité permet de maintenir le volet (1a) en position normale jusqu'à une survitesse limite et qui provoque un pivotement de ce même volet (1a) sous l'action des forces aérodynamiques au-dessus de cette limite.

9. Rotor monopale selon la revendication 8, caractérisé par le fait que l'éxtrémité de la pale (volet) (1a) est soumises à l'intérieur à la pression dynamique du flux d'air et que l'extrados est muni de déporteurs à ressort s'ouvrant sous la pression de l'air avant que la survitesse limite ne soit atteinte.

10. Procédé pour l'arrêt du rotor monopale selon les revendications 7 à 9, caractérisé par le fait que le degré de liberté de tangage et de lacet de l'axe du rotor est momentanément réduit et que la vitesse de rotation est également réduite par diminution de l'incidence de la pale et pivotement du volet situé à l'extrémité de celle-ci. Puis, une fois la vitesse du rotor suffisamment basse et la pale en position presque horizontale, l'extrémité orientable est amenée en position croisée (90°) et, dans le même temps, l'axe du rotor retrouve sa pleine liberté de lacet afin que la pale puisse se placer horizontalement dans le sens du vent.

11. Procédé pour la mise en route du rotor monopale selon l'une des revendications 7 à 9, caractérisé par le fait que, le degré de liberté de l'arbre du rotor (tangage et lacet) étant réduit, l'extrémité orientable de la pale horizontale dans le sens du vent est ramenée de la position croisée (90°) en position normale, tandis que simultanément l'arbre du rotor est placé dans le vent par un actionneur, ce qui a pour effet de provoquer la mise en action du rotor et, une fois la vitesse de rotation de consigne atteinte, le degré de liberté normal (tangage et lacet) de l'arbre est rétabli.

# Fig.1

# Fig.2

# Fig.3

# Fig.4a

# Fig.4b

Fig.5